# EUROPÄISCHE PATENTSCHRIFT

(11) **EP 1 586 780 B1**
(45) Veröffentlichungstag und Bekanntmachung des Hinweises auf die Patenterteilung: **20.06.2007**
(21) Anmeldenummer: 04400021.4
(22) Anmeldetag: 13.04.2004
(51) Int. Cl.: F15B 21/04, F15B 19/00, F15B 21/08

(54) **Steuermodulanordnung und Druckluft-Wartungseinheit**
Control module arrangement and compressed air preparation unit
Agencement de module de commande, et unité pour la préparation de l'air comprimé

(43) Veröffentlichungstag der Anmeldung: 19.10.2005
(73) Patentinhaber: Festo AG & Co., 73734 Esslingen (DE)
(72) Erfinder: Gebauer, Günter, Dipl.-Ing., 73728 Esslingen (DE); Garner, Jens, Dipl.-Ing., 70374 Stuttgart (DE); Klaus, Kleinrad, 73257 Köngen (DE)
(74) Vertreter: Bregenzer, Michael

(56) Entgegenhaltungen:
- EP-A- 0 909 898
- EP-A- 1 400 702
- WO-A-94/04831
- DE-C- 10 164 667
- DE-C- 10 164 677

## Beschreibung

Die Erfindung betrifft eine Steuermodulanordnung für eine batterieartig aufgebaute Druckluft-Wartungseinheit, die mehrere aneinander gereihte Wartungsmodule wie z.B. Druckregler, Filter, Öler oder dergleichen aufweist, wobei die Steuermodulanordnung zur Kommunikation mit den Wartungsmodulen über einen internen Bus der Wartungseinheit ausgestaltet ist, und wobei die Steuermodulanordnung erste Kommunikationsmittel zur Kommunikation mit einer übergeordneten Steuervorrichtung zur Steuerung und/oder Überwachung der Druckluft-Wartungseinheit aufweist. Die Erfindung betrifft ferner eine Druckluft-Wartungseinheit mit mehreren aneinander gereihten Wartungsmodulen und einer derartigen Steuermodulanordnung.

Eine solche Steuermodulanordnung ist beispielsweise aus der EP 1 400 702 A2 bekannt. Die Steuermodulanordnung enthält ein Steuermodul, das über einen internen Bus mit den Modulen der Wartungseinheit sowie mit Ventilmodulen kommuniziert. Die Ventilmodule steuern externe Aktoren an, beispielsweise Druckluftzylinder. Das Steuermodul ist über eine Feldbus-Schnittstelle an ein externes Bussystem angekoppelt und kann von einer externen Steuerzentrale Steuerbefehle erhalten. Ferner gibt das Steuermodul an der Feldbus-Schnittstelle Diagnoseinformationen an die externe Steuerzentrale aus.

Bei der bekannten Steuermodulanordnung kann es zu Informationsengpässen bei der Kommunikation an der Feldbus-Schnittstelle kommen, so dass beispielsweise wichtige Systemmeldungen an die externe Steuerzentrale nicht ausgegeben werden können, weil gerade Diagnosemeldungen übertragen werden. Ferner kann das bekannte Steuermodul die Feldbus-Schnittstelle nur bis zu einem gewissen Grad mit Diagnosemeldungen belasten, um die zu Steuerungszwecken erforderliche Kommunikation nicht zu beeinträchtigen.

Es ist daher die Aufgabe der Erfindung, eine Steuermodulanordnung bzw. eine Druckluft-Wartungseinheit bereitzustellen, die über erweiterte Kommunikationsmöglichkeiten verfügen.

Aus der WO 94/04831 ist eine elektro-pneumatische Steuereinrichtung für eine Ventilstation mit mehreren pneumatischen Ventilen bekannt. An die Ventilstation kann ein Computer zur Programmierung und Inbetriebnahme angeschlossen werden. Alternativ ist an diese Schnittstelle auch ein Anzeige- oder Bediengerät anschließbar.

Bei einer Steuermodulanordnung der eingangs genannten Art ist zur Lösung der Aufgabe vorgesehen, dass sie zweite Kommunikationsmittel zur Kommunikation mit einer übergeordneten Diagnosevorrichtung aufweist, über die Diagnosedaten zur Diagnose mindestens einer Funktion der Druckluft-Wartungseinheit ausgebbar sind. Die erfindungsgemäße Druckluft-Wartungseinheit ist mit einer derartigen Steuermodulanordnung ausgestattet.

Die Diagnosedaten werden separat von den Steuerdaten kommuniziert, so dass eine Steuerung der Steuermodulanordnung bzw. der Druckluft-Wartungseinheit jederzeit möglich ist. Es ist möglich, die Kommunikationsmittel für die jeweilige Aufgabe - Steuerung oder Diagnose - optimal anzupassen. Die Diagnosedaten können im Vergleich zu den Steuerdaten einen wesentlich größeren Umfang haben, beispielsweise grafische Darstellungen der Druckluft-Wartungseinheit, Kurvendarstellungen, Messwertmeldungen in dichter Folge oder dergleichen. Die Diagnosevorrichtung, an die auch weitere Vorrichtungen, Ventilbatterien, Wartungseinheiten oder dergleichen angeschlossen werden können, gibt die Diagnosedaten dann aus, beispielsweise an einer grafischen Bedienoberfläche. Die Diagnosedaten enthalten beispielsweise Visualisierungsdaten.

Vorteilhafte Ausgestaltungen der Erfindung ergeben sich aus den abhängigen Ansprüchen sowie aus der Beschreibung.

Zweckmäßigerweise bedient die Steuermodulanordnung die ersten Kommunikationsmittel vorrangig vor den zweiten Kommunikationsmitteln.

Zweckmäßigerweise sendet die Steuermodulanordnung auch über die ersten Kommunikationsmittel Diagnosemeldungen, vorteilhafterweise jedoch weniger Diagnosemeldungen als über die zweiten Kommunikationsmittel. An den ersten Kommunikationsmitteln werden beispielsweise systemkritische Diagnosemeldungen, z.B. Grenzwertverletzungen kritische Störungsmeldungen oder dergleichen ausgegeben.

Zweckmäßigerweise sind bei der Steuermodulanordnung Sendeparameter zum Senden von Diagnosedaten einstellbar. Dies betrifft die ersten und/oder die zweiten Kommunikationsmittel, wobei vorzugsweise über die ersten Kommunikationsmittel Sendeparameter zur Diagnose-Parametrierung der ersten Kommunikationsmittel empfangen werden und über die zweiten Kommunikationsmittel zweite Sendeparameter zur Parametrierung dieser zweiten Kommunikationsmittel.

Ferner ist z.B. ein Download und/oder Upload von Parametern und/oder Prüfprogrammen und/oder sonstiger Software an den zweiten Kommunikationsmitteln bevorzugt.

Zweckmäßigerweise ist bei den zweiten Kommunikationsmitteln eine Empfangssperre für bestimmte Steuerbefehle zur Steuerung der Druckluft-Wartungseinheit vorhanden. Auf diesem Weg wird verhindert, dass über die zweiten Kommunikationsmittel, die Diagnose-Kommunikationsmittel, Steuerbefehle an die Steuermodulanordnung gegeben werden, die an sich über die ersten, die Steuerungs-Kommunikationsmittel, übertragen werden müssen.

Zweckmäßigerweise sind die ersten Kommunikationsmittel echtzeitfähig, so dass die Steuermodulanordnung bzw. die Wartungseinheit in Echtzeit steuerbar ist. Die zweiten Kommunikationsmittel können eine größere Übertragungsbandbreite als die ersten Kommunikationsmittel aufweisen, wobei hier die Echtzeitfähigkeit eine geringere Rolle spielt. Die ersten und/oder die zweiten Kommunikationsmittel weisen zweckmäßigerweise eine Bus-Schnittstelle auf, z.B. eine Ethernet-Schnittstelle, eine Feldbus-Schnittstelle oder dergleichen. Insbesondere bei den zweiten Kommunikationsmitteln ist es bevorzugt, dass sie eine drahtlose Kommunikation ermöglichen, beispielsweise über WLAN (Wireless LAN).

Die Diagnosedaten weisen zweckmäßigerweise ein durch einen Internet-Browser herstellbares Format auf. Die Diagnosedaten sind beispielsweise in HTML (Hypertext Markup Language) codiert.

Die Steuermodulanordnung kann sozusagen monolithisch als eine einzige Baueinheit aufgebaut sein, die sowohl die Steuerungsaufgaben als auch die Diagnoseaufgaben erfüllt. Vorteilhafterweise weist die Steuermodulanordnung aber ein Steuermodul, das die ersten Kommunikationsmittel zur Kommunikation mit der übergeordneten Steuervorrichtung enthält und ferner ein Diagnosemodul auf, das die zweiten Kommunikationsmittel mit der Diagnosevorrichtung aufweist. Das Steuermodul und das Diagnosemodul können über eine proprietäre Verbindung oder zweckmäßigerweise über den internen Bus miteinander kommunizieren.

Die Steuermodulanordnung, beispielsweise das Diagnosemodul, enthalten zweckmäßigerweise Diagnosemittel zur Kommunikation mit einer Ein-/Ausgabeeinrichtung der Wartungseinheit. Die Ein-/Ausgabeeinrichtung, z.B. ein Ein-/Ausgabemodul, weist Anschlussmittel auf, an die ein oder mehrere Diagnosesensoren angeschlossen werden können. Ferner sind an die Anschlussmittel auch ein oder mehrere Druckluftbeeinflussungsaktoren anschließbar. Bei dem mindestens einen Druckluftbeeinflussungsaktor handelt es sich beispielsweise um Aktoren zur Beeinflussung von Druck und/oder Strömung der Druckluft, z.B. ein pneumatisches Ventil, einen pneumatischen Regler oder dergleichen. Die Steuermodulanordnung kann über die Ein-/Ausgabeeinrichtung die Sensoren bzw. Aktoren ansteuern und von diesen Meldungen empfangen. Die Steuermodulanordnung kommuniziert mit der Ein-/Ausgabeeinrichtung zweckmäßigerweise über den internen Bus. Der Diagnose-Sensor ist beispielsweise in einer von der Wartungseinheit separaten Baueinheit, beispielsweise einer Ventilbatterie, einer abgesetzten Wartungseinheit oder dergleichen enthalten. Mit Hilfe der Ein-/Ausgabeeinrichtung wird die Steuermodulanordnung sozusagen zu einem Diagnoseknoten, der Diagnosemeldungen weiterer zu diagnostizierender Einrichtungen verarbeiten kann.

Der mindestens eine von der Wartungseinheit separate Diagnosesensor bzw. der mindestens eine Druckluftbeeinflussungsaktor sind zweckmäßigerweise Bestandteile einer von der Wartungseinheit mit Druckluft versorgten Baueinheit, z.B. einer Ventilbatterie oder Wartungseinheit, oder sind einer solchen Baueinheit zugeordnet. Bei dem separaten Diagnosesensor handelt es sich zweckmäßigerweise um einen Partikelmesser, Feuchtigkeitsmesser, Druckmesser, Durchflussmesser oder dergleichen. Auch Temperatursensoren, elektrische Messkontakte, Reedkontakte, Endkontakte, Positionssensoren oder dergleichen sind möglich. Es versteht sich, dass die Ein-/Ausgabeeinrichtung auch einen Bestandteil der erfindungsgemäßen Steuermodulanordnung bilden kann.

Die Anschlussmittel der Ein-/Ausgabeeinrichtung sind vorteilhafterweise zum Anschluss eines fluidtechnischen Schlauches mit mindestens einem Signalleiter zur Verbindung mit dem mindestens einen externen Diagnosesensor bzw. dem mindestens einen externen Druckluftbeeinflussungsaktor ausgestaltet. Der Signalleiter ist beispielsweise ein optischer oder elektrischer Leiter.

Die Diagnosemittel bilden die Diagnosedaten zweckmäßigerweise anhand der Diagnosemeldungen des separaten Diagnosesensors und/oder anhand der Diagnosemeldungen der Wartungsmodule.

Eine weitergehende, zweckmäßige Variante der Erfindung sieht vor, dass die Steuermodulanordnung zur Ansteuerung der Wartungsmodule und/oder des mindestens einen von der Wartungseinheit separaten Druckluftbeeinflussungsaktors ausgestaltet ist, wobei sie die Diagnosemeldungen des separaten Diagnosesensors bzw. der Wartungsmodule auswertet. Es ist auch möglich, dass die Steuermodulanordnung dazu die Diagnosedaten auswertet.

Die Steuermodulanordnung ist zweckmäßigerweise zur Verknüpfung von Diagnosemeldungen ausgestaltet, wobei sie mindestens eine Verknüpfungsbedingung durchführt. Solche Verknüpfungen sind beispielsweise die Bildung von Relationen zwischen Druck-Messwerten zwischen Druck-Messwerten und Durchfluss-Messwerten, Temperaturen und Durchfluss-Messwerten oder dergleichen. Eine weitere Verknüpfungsbedingung kann beispielsweise sein, dass die Steuermodulanordnung bei Überschreiten eines Grenzwertes Messwerte häufiger oder seltener im Rahmen der Diagnosedaten an die Diagnosevorrichtung überträgt.

Ferner ist die Steuermodulanordnung zur Durchführung einer Datenreduktion vorteilhafterweise ausgestaltet, wobei sie beispielsweise nur Maximalwerte überträgt, Diagnosemeldungen nur in vorbestimmten Zeitrastern übermittelt oder dergleichen.

Vorteilhafterweise ist eine Bediengeräte-Schnittstelle an der Steuermodulanordnung vorhanden, an die ein lokales Bedien-und/oder Visulalisierungs- und/oder Paramtriergerät anschließbar ist. Über das Bediengerät können beispielsweise Steuerparameter, Diagnoseparameter oder dergleichen vorgegeben werden. Ferner ist es auch möglich, dass das Bediengerät zur Visualisierung von Daten ausgestaltet ist, beispielsweise zur Ausgabe der Diagnosedaten. Bei dem Bediengerät handelt es sich beispielsweise um einen Personal-Computer, einen Personal Digital Assistant (PDA) oder dergleichen.

Nachfolgend werden Ausführungsbeispiele der Erfindung anhand der Zeichnung erläutert. Es zeigen:
- Figur 1: ein pneumatisches System mit einer erfindungsgemäßen Druckluft-Wartungseinheit, die eine erfindungsgemäße Steuermodulanordnung enthält und in ein Diagnosenetzwerk und ein Steuernetzwerk eingebunden ist,
- Figur 2: eine schematische Ansicht der Steuermodulanordnung gemäß Figur 1,
- Figur 3: ein Druckluftschlauch mit Signalleitern zum Anschluss an die Druckluft-Wartungseinheit gemäß Figur 1, und
- Figur 4: ein weiteres pneumatisches System, in das erfindungsgemäße Druckluft-Wartungseinheiten eingebunden sind.

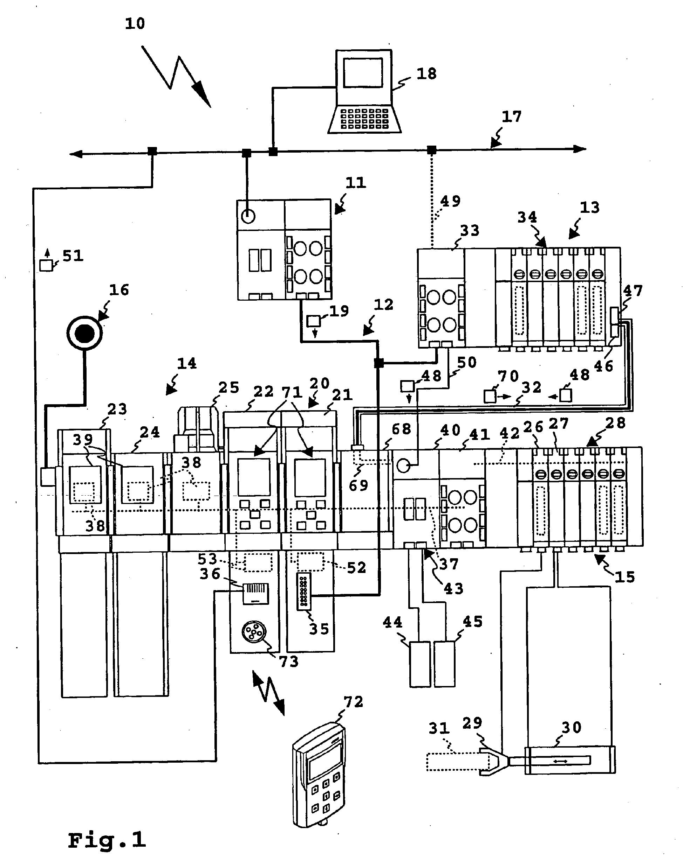

Bei einem pneumatischen System 10 gemäß Figur 1 steuert eine Steuervorrichtung 11 über ein Steuernetzwerk 12 eine Ventilbatterie 13, eine Druckluft-Wartungseinheit 14 sowie eventuell weitere, nicht dargestellte pneumatische Funktionseinheiten. Die Druckluft-Wartungseinheit 14 versorgt die Ventilbatterie 13 sowie eine Ventilbatterie 15, die einen Bestandteil der Druckluft-Wartungseinheit 14 bildet, mit Druckluft aus einer Druckluftquelle 16, die die Druckluft-Wartungseinheit 14 aufbereitet, beispielsweise filtert, ölt oder dergleichen.

Die Steuervorrichtung 11 ist beispielsweise eine speicherprogrammierbare Steuerung, die Steuerbefehle 19 an die Druckluft-Wartungseinheit 14 bzw. deren Ventilbatterie 15 sowie an die Ventilbatterie 13 sendet.

Bei der Druckluft-Wartungseinheit 14 wertet eine Steuermodulanordnung 20 mit einem Steuermodul 21 und einem Diagnosemodul 22 die Steuerbefehle 19 zur Ansteuerung von Wartungsmodulen 23, 24, 25 sowie Ventilmodulen 26, 27 und weiteren Ventilmodulen 28 der Ventilbatterie 15 aus. Die Wartungsmodule 23, 24, 25 enthalten beispielsweise ein Einschalt-Ventilmodul, ein Filtermodul, ein Druckreglermodul, ein Ölermodul oder dergleichen. Die Ventilmodule 26, 27, 28 dienen zur Ansteuerung pneumatischer Aktoren, beispielsweise eines Greifers 29 und eines pneumatischen Aktors 30, z.B. eines Linearantriebs, beispielsweise zum Ergreifen und Handhaben eines Objekts 31. Die Ventilmodule 26, 27 beaufschlagen den Aktor 30 bzw. den Greifer 29 durch die Wartungsmodule 23 bis 25 aufbereiteter Druckluft, um sie zu betätigen.

Die Wartungseinheit 14 versorgt über eine Druckluftleitung 32 die Ventilbatterie 13 mit aufbereiteter Druckluft. Bei der Ventilbatterie 13 steuert eine lokale Steuervorrichtung 33 Ventilmodule 34 anhand der Steuerbefehle 19. Die Ventilmodule 34 beaufschlagen nicht dargestellte pneumatische Aktoren mit Druckluft aus der Druckluftleitung 32.

Die Steuermodulanordnung 20 bzw. die Wartungseinheit 14 bilden einen Diagnoseknoten innerhalb des Diagnosenetzwerks 17, z.B. ein Ethernet-, Profinet-, Modbus TCP-Netzwerk oder dergleichen. Eine weitere vorteilhafte Eigenschaft ist, dass erste und zweite Kommunikationsmittel 35, 36 bei der Druckluft-Wartungseinheit 14 bzw. der Steuermodulanordnung 20 vorhanden sind, so dass für Steuerzwecke und Diagnosezwecke separate Kommunikationsmittel vorgesehen sind. Bei der Steuermodulanordnung 20 ist die Aufgabenteilung Diagnose-Steuerung zusätzlich dadurch verbessert, dass für Steuerungsaufgaben und Diagnoseaufgaben jeweils dedizierte Module, nämlich das Steuermodul 21 und das Diagnosemodul 22, vorgesehen sind. Das Steuermodul 21 ist durch Diagnoseaufgaben nicht belastet. Dennoch ist es vorteilhaft, dass das Steuermodul 21 vorbestimmte, insbesondere systemkritische Diagnosemeldungen über das Steuernetzwerk 12 meldet, beispielsweise Grenzwert-Überschreitungsmeldungen, Alarmmeldungen oder dergleichen.

Die Module der Wartungseinheit 14, das heißt vorliegend beispielsweise die Steuermodulanordnung 20 und die Wartungsmodule 23, 24, 25, kommunizieren über einen internen Bus 37 der Wartungseinheit 24. Bei dem Bus 37 kann es sich um einen proprietären Bus handeln. Es ist aber auch möglich, dass der Bus 37 als ein Feldbus, ein Ethernet-Bus oder dergleichen ausgestaltet ist. Über den Bus 37 können die Module der Wartungseinheit 14 Meldungen oder Steuerbefehle versenden und empfangen, wobei beispielsweise das Diagnosemodul 22 von den Wartungsmodulen 23, 24, 25 Diagnosemeldungen erhält und das Steuermodul 21 Steuerbefehle an die Wartungsmodule 23, 24, 25 sendet, beispielsweise Einschaltbefehle, Dosierbefehle für eine zu dosierende Ölmenge oder dergleichen. Die Wartungsmodule 23, 24, 25 besitzen für die Kommunikation mit dem Bus 37 sowie für Steuerungsaufgaben beispielsweise Controller 38. Zum Teil weisen die Wartungsmodule 23 bis 25 Ein-/Ausgabemittel 39, beispielsweise Bedientasten, Leuchtanzeigen oder dergleichen auf.

Ferner sind an den internen Bus 37 Ein-/Ausgabemodule 40, 41 angeschlossen. Über das Ein-/Ausgabemodul 41 kann das Steuermodul 41 Steuerbefehle an die Ventilmodule 26 bis 28 senden. Das Ein-/Ausgabemodul 41 gibt diese Befehle auf einem Bus 42 an die Ventilmodule 26 bis 28 aus. Ferner kann das Ein-/Ausgabemodul 41 auf dem Bus 42 Meldungen von den Ventilmodulen 26 bis 28 empfangen und dem Steuermodul 21 bzw. dem Diagnosemodul 22 melden. Bei diesen Meldungen handelt es sich beispielsweise um Störungsmeldungen, Schaltzustandsmeldungen oder dergleichen. Es versteht sich, dass auch eine Variante möglich ist, bei der die Ventilmodule 26 bis 28 direkte Busteilnehmer am Bus 37 sind.

Das Ein-/Ausgabemodul 40 ist dem Diagnosemodul 22 zugeordnet. Das Ein-/Ausgabemodul 40 bildet eine Ein-/Ausgabeeinrichtung mit Anschlussmitteln 43 zum Anschluss von von der Wartungseinheit 14 separaten Diagnose-Sensoren, beispielsweise Sensoren 44, 45, 46. Ferner sind an die Anschlussmittel 43, die beispielsweise entsprechende elektrische und/oder optische Kontakte enthalten, von der Wartungseinheit separate Druckluftbeeinflussungsaktoren, z.B. ein Schaltventil 47, anschließbar. Die Diagnose-Sensoren 44 sind beispielsweise Temperatursensoren, Drucksensoren, Partikelmesser oder dergleichen, die an von der Wartungseinheit 14 separaten Baueinheiten angeordnet sind, beispielsweise dem Aktor 30 und der Ventilbatterie 13. Der Diagnosesensor 46 überwacht beispielsweise den Druck im Anschlussbereich der Druckluftleitung 32 an der Ventilbatterie 13 und sendet als Diagnosemeldungen 48 beispielsweise Meldungen über den Druck, die Temperatur einen Partikelgehalt oder dergleichen im Bereich der Ventilbatterie 13.

Prinzipiell wäre es zwar möglich, dass das Steuermodul 33 der Ventilbatterie 13 Diagnosemeldungen über eine Verbindung 49 auf das Diagnosenetzwerk 17 ausgibt. Vorliegend jedoch bildet die Wartungseinheit bzw. die Steuermodulanordnung 20 einen Diagnoseknoten innerhalb des Diagnosenetzwerks 17, an den die Ventilbatterie 13 bzw. deren Steuermodul 33 Diagnosemeldungen 48 über eine Verbindung 50 meldet. Die Verbindung 50 führt ebenfalls zum Ein-/Ausgabemodul 40. Es ist möglich, dass beide Verbindungen 49, 50 vorhanden sind, wobei die Ventilbatterie 13 Diagnosemeldungen teilweise direkt über die Verbindung 49 auf das Diagnosenetzwerk 17 ausgibt und teilweise, z.B. soweit sie die Druckluftaufbereitung betreffen und beispielsweise Druckmesswerte, Feuchtigkeitsmesswerte oder dergleichen enthalten, auf die Verbindung 50 ausgibt, so dass das Diagnosemodul 22 diese Diagnosemeldungen 48 zur Bildung von Diagnosedaten 51 auswerten kann.

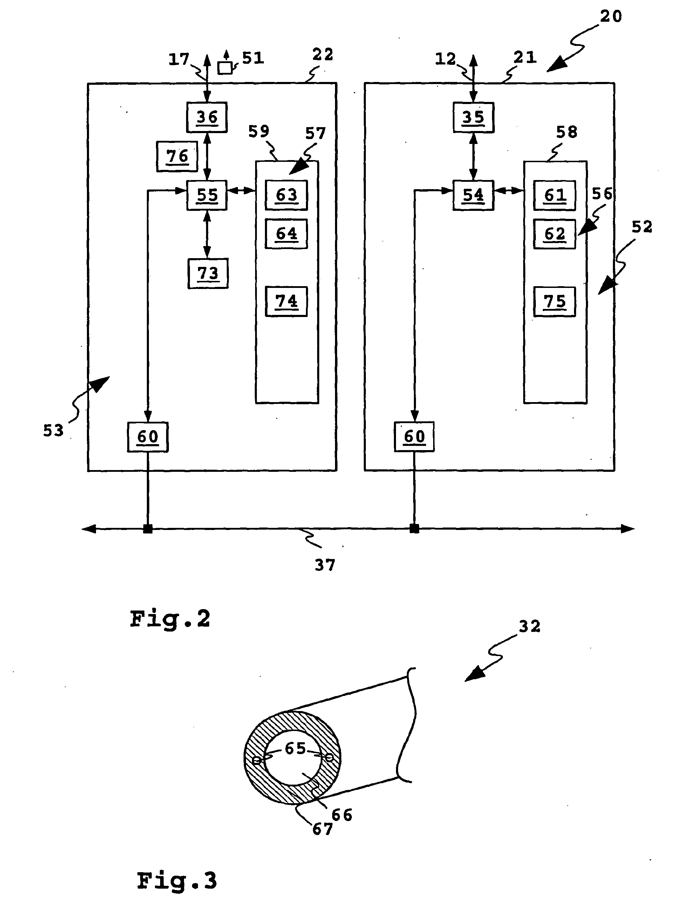

Die Funktionen von Steuermitteln 52 des Steuermoduls 21 zur Steuerung der Wartungseinheit 14 und von Diagnosemitteln 53 des Diagnosemoduls 22 wird nachfolgend anhand der Figur 2 erläutert.

Die Steuermittel 52 und die Diagnosemittel enthalten jeweils einen Prozessor 54, 55 zur Ausführung von Programmcode von Programmmodulen 56, 57, die in Speichermitteln 58, 59 gespeichert sind. Die Speichermittel 58, 59 enthalten beispielsweise flüchtigen und/oder nicht flüchtigen Speicher. Der Programmcode der Programmmodule 56, 57 enthält Instruktionen zur Realisierung der Steuerfunktionen und Diagnosefunktionen des Steuermoduls 21 bzw. des Diagnosemoduls 22. Die Prozessoren 54, 55 sind mit den Speichermitteln 58, 59 sowie mit Kommunikationsmitteln des Steuermoduls 21 bzw. des Diagnosemoduls 22 über interne Verbindungen verbunden, die durch Pfeile schematisiert angedeutet sind. Beispielsweise enthalten die Module 21, 22 Bus-Controller 60 als Bus-Kommunikationsmittel zur Kommunikationen am internen Bus 37. Ferner kommunizieren die Prozessoren 54, 55 mit Hilfe der Kommunikationsmittel 35, 36 mit dem Steuernetzwerk 12 und dem Diagnosenetzwerk 17. Die Kommunikationsmittel 35 enthalten beispielsweise einen Feldbus-Controller für das Steuernetzwerk 12, bei dem es sich zweckmäßigerweise um ein Feldbus-Netzwerk handelt, beispielsweise ein CAN-, ein ASi-Netzwerk, Profibus, Interbus, Devicenet oder dergleichen (CAN = Controller Area Network, ASi = Aktor-Sensor-Interface).

Die zweiten Kommunikationsmittel 36 enthalten zweckmäßigerweise einen Ethernet-Controller, einen W-LAN-Controller (= Wireless LAN) oder dergleichen für das Diagnosenetzwerk 17, das zweckmäßigerweise eine größere Übertragungsbandbreite als das Steuernetzwerk 12 aufweist. Das Steuernetzwerk 12 hingegen ist zweckmäßigerweise echtzeitfähig und somit optimal für Steuerungsaufgaben ausgelegt.

Bei der Steuermodulanordnung 20 sind für Steuerungsaufgaben und Diagnoseaufgaben jeweils separate Prozessoren 54, 55 vorhanden. Es versteht sich, dass auch weitere Prozessoren vorhanden sein können. Aber auch eine Bauweise mit nur einem einzigen Prozessor ist möglich. Insbesondere bei dieser Variante ist bevorzugt, dass dieser einzige Prozessor die Steuerungsaufgaben vorrangig vor den Diagnoseaufgaben erfüllt, beispielsweise die ersten Kommunikationsmittel 35 für das Steuernetzwerk 12 vorrangig vor den zweiten Kommunikationsmitteln 36 für das Diagnosenetzwerk 17 bedient.

Die Programmmodule 56 des Steuermoduls 21 enthalten beispielsweise ein SPS-Modul (SPS = speicherprogrammierbare Steuerung) zur Steuerung der Wartungsmodule 23 bis 25 und/oder der Ventilmodule 26, 27, 28. Ferner ist ein Diagnoseprogrammmodul 62 vorhanden, das insbesondere systemkritische Diagnosemeldungen auf dem Steuernetzwerk 12 ausgibt, beispielsweise wenn ein Filter bis zu einer kritischen Grenze verschmutzt ist, ein Additiv für die aufzubereitende Druckluft nahezu verbraucht ist, eine Störung bei einem der Wartungsmodule 23, 24, 25 oder der Ventilmodule 26, 27, 28 aufgetreten ist, oder dergleichen. Derartige systemkritische Diagnose-Meldungen würden die Funktionsfähigkeit der Wartungseinheit 14 beeinträchtigen und somit die Durchführung von Steuerbefehlen 19 der Steuervorrichtung 11 beeinträchtigen, wenn nicht gar unmöglich machen.

Wesentlich weitergehende Diagnosefunktionen als das Steuermodul 21 bietet das Diagnosemodul 22, dessen Programmmodule 57 ebenfalls ein Diagnose-Programmmodul 63 aufweisen. Das Diagnose-Programmmodul 63 verarbeitet die Diagnose-Meldungen 48 und generiert aus diesen Diagnosedaten 51, die es auf dem Diagnosenetzwerk 17 ausgibt. Die Diagnosedaten 51 enthalten beispielsweise in regelmäßigen Zeitabständen einen Füllstand eines Additivs, das eines der Wartungsmodule 23, 24 oder 25 der Druckluft aus der Druckluftquelle 16 zufügt, einen Differenzdruckwert zwischen Drücken am Eingang und am Ausgang des als Filter ausgestalteten Wartungsmoduls 24 oder dergleichen. Aus einem derartigen Differenzdruck kann beispielsweise der Verschmutzungsgrad des Filters des Wartungsmoduls 24 ermittelt werden. Weiterhin können die Diagnosedaten 51 beispielsweise regelmäßig Partikelwerte von in der Druckluft enthaltenen Partikeln, Feuchtigkeitswerte oder dergleichen enthalten.

Ferner enthalten die Programmmodule 57 des Diagnosemoduls 22 ein Visualisierungsmodul 64 zur Ausgabe von Visualisierungsdaten im Rahmen der Diagnosedaten 51. Diese Visualisierungsdaten, die z.B. an der Diagnosevorrichtung 18 ausgegeben werden können, enthalten beispielsweise eine grafische Abbildung der Wartungseinheit 14 und/oder deren Module, Messwert-ZeitDiagramme, Operantenwerte, z.B. Parameter, Anschlussbelegungen etc., oder sonstiger Diagnosedaten. Somit steht an der Diagnosevorrichtung 18 z.B. ein Abbild der Wartungseinheit zur Verfügung. In den Visualisierungsdaten können beispielsweise die einzelnen Wartungsmodule 23, 24, 25 grafisch in Abhängigkeit von ihrem jeweiligen Betriebszustand (beispielsweise gestört/nicht gestört) dargestellt werden.

Besonders bevorzugt ist eine Selbstkonfiguration der Wartungseinheit 14, bei der sich die Module der Wartungseinheit 14 bei der Steuermodulanordnung 20 sozusagen selbstständig anmelden. Beispielsweise senden die Wartungsmodule 23, 24, 25 Idenitifizierungskennungen und/oder ihre zumindest teilweise technischen Daten über den internen Bus 37 an die Steuermodulanordnung 20. Anhand dieser Identifizierungskennungen bzw. technischen Daten ist beispielsweise das Diagnosemodul 22 in der Lage, die Wartungsmodule 23 bis 25 an der Diagnosevorrichtung 18 grafisch darzustellen.

Das Diagnose-Programmmodul 63 kann Diagnose-Meldungen 48 miteinander verknüpfen und somit sozusagen verknüpfte Diagnosedaten 51 bilden. Dabei bildet das Diagnose-Programmmodul beispielsweise Relationen zwischen Druckwerten, die von den Wartungsmodulen 23, 24 und 25 ermittelt werden. Auf demselben Wege können auch Relationen von Durchflussmesswerten, beispielsweise zur Ermittlung eines Verbrauchsmesswertes der Ventilbatterien 13 und 15, gebildet werden. Die Diagnosedaten 51 können ferner Maximalwerte und/oder Minimalwerte, beispielsweise zur Ermittlung eines maximalen Druckluftbedarfes oder dergleichen, enthalten. Ferner kann das Diagnose-Programmmodul 63 eine Datenreduktion durchführen und vorbestimmte Meldungen der Diagnose-Meldungen 48 nur in vorbestimmten zeitlichen Abständen, beispielsweise jede Minute, jede Sekunde oder dergleichen im Rahmen der Diagnosedaten 51 am Diagnosenetzwerk 17 ausgeben. Das Diagnose-Programmmodul 63 kann auch Durchschnittswerte bilden.

Ferner ist es möglich, dass das Diagnose-Programmmodul 63 den Datenverkehr zwischen den Modulen der Wartungseinheit 14 sozusagen mithört und aus diesem Datenverkehr Diagnosedaten 51 generiert. Dabei ist eine Verknüpfung dieser Diagnose-Meldungen zweckmäßig, bei der das Diagnose-Programmmodul 63 beispielsweise aus Druckmesswerten, die die Wartungsmodule 23, 25 ermitteln, Quotienten bildet.

Die Diagnosedaten 51, insbesondere die vom Visualisierungsmodul 64 erzeugten Visualisierungsdaten, weisen zweckmäßigerweise ein mittels eines Internet-Browsers darstellbares Format auf, beispielsweise HTML (HTML = Hypertext Markup Language).

Die Steuermodulanordnung 20 steuert den von der Wartungseinheit 14 separaten Druckluftbeeinflussungsaktor 47 in Gestalt eines Schaltventils, Proportionalventils oder dergleichen in Abhängigkeit von den Diagnose-Meldungen 48. Wenn der Diagnose-Sensor 46 beispielsweise einen zu hohen oder zu geringen Druck mit den Diagnose-Meldungen 48 meldet, schaltet das Diagnose-Programmmodul 63 das Ventil 47 zur Lösung dieses Problems, öffnet das Ventil 47 beispielsweise weiter oder schließt es. Es ist auch möglich, dass das SPS-Modul 61 des Steuermoduls 21 das Schaltventil 47 in Abhängigkeit von den Diagnose-Meldungen 48 des Sensors 46 betätigt.

Die Druckluft-Leitung 32 enthält einen Druckluftkanal 66, der durch eine Wandung 67 begrenzt ist. In der Wandung 67 verlaufen optische oder elektrische Signalleiter 65 zur Kommunikation mit von der Wartungseinheit 14 separaten Diagnose-Sensoren und/oder Druckbeeinflussungsventilen, vorliegend dem Diagnose-Sensor 46 und dem Schaltventil 47. Somit ist es nicht erforderlich, weitere Signal-Verbindungen für Diagnosezwecke zwischen der Wartungseinheit 14 und der Ventilbatterie für Diagnoseaufgaben zu installieren. Die Druckluft-Leitung 32 ist an ein Anschlussmodul 68 der Wartungseinheit 14 angeschlossen. Das Anschlussmodul 68 ist mittels Verbindungsleitungen 69 mit dem Ein-/Ausgabemodul 40 verbunden, so dass das Ein-/Ausgabemodul 40 die Diagnosemeldungen 48 des Sensors 46 empfangen kann und Steuerbefehle 70 zur Ansteuerung des Aktors 47 ausgeben kann. Es wäre auch eine Variante möglich, bei der das Anschlussmodul 68 beispielsweise einen Bus-Controller oder sonstige Kommunikationsmittel zur Kommunikation am internen Bus 37 aufweist, um mit der Steuermodulanordnung 20 zu kommunizieren.

Die Steuermodulanordnung 20, vorliegend das Steuermodul 21 sowie das Diagnosemodul 22, weisen Ein-/Ausgabemittel 71 z.B. an deren Vorderseite auf. Über die Ein-/Ausgabemittel 71, die beispielsweise Drucktasten, ein Display oder dergleichen enthalten, kann die Steuermodulanordnung 20 Funktionen der Wartungseinheit 14 visualisieren bzw. lokale Bedienbefehle empfangen.

Ferner ist eine lokale Bedienung, Parametrierung, Visualisierung oder dergleichen mit Hilfe eines Bediengeräte 72 möglich, das an eine Bediengeräte-Schnittstelle 73 drahtgebunden oder, was bevorzugt ist, drahtlos angekoppelt werden kann. Beispielsweise kann das Diagnose-Programmmodul 63 an der Schnittstelle 63 die Diagnosedaten 51 ganz oder teilweise ausgeben. Eine drahtgebundene Variante der Bediengeräte-Schnittstelle 73 weist vorzugsweise eine hohe elektrische Schutzart und/oder industrietaugliche Daten-Übertragungsmethoden auf. Bei dem Bediengerät 72 handelt es sich vorzugsweise um ein für Industrie-Umgebungen geeignetes MMI (Man Machine Interface), beispielsweise um einen Personal-Computer, ein Notebook, einen Personal Digital Assistent (PDA) oder dergleichen.

Vorzugsweise ist die Steuermodulanordnung 20 parametrierbar, wobei beispielsweise Umfang, Qualität oder sonstige Eigenschaften der Diagnosedaten 51 mittels Parametern 74 einstellbar sind. Beispielsweise sendet die Diagnose-Vorrichtung 18 die Parameter 74 an das Diagnosemodul 22 über das Diagnosenetzwerk 17. Die Parameter 74 enthalten beispielsweise Schwellwerte, Sendeabstände zwischen zu sendenden Messwerten, Einschalt-/Ausschaltbefehle zum Senden von Messwerten oder dergleichen. Es ist auch möglich, Programmteile, beispielsweise zur Bildung von Quotienten, zur Bildung grafischer Visualisierungsdaten oder dergleichen von der Diagnosevorrichtung 18 an das Diagnosemodul 22 übermittelt werden. In entsprechender Weise kann das Diagnose-Programmmodul 62 des Steuermoduls 21 mittels Parametern 75 parametriert werden. Beispielsweise sendet die Steuervorrichtung 11 die Sendeparameter 75 an das Steuermodul 21.

Insbesondere dann, wenn die Steuermodulanordnung 20 nur ein einziges Modul enthält, das sowohl die Diagnosemittel als auch die Steuermittel 52, 53 enthält, ist es bevorzugt, dass eine Sperreinrichtung 76 an den zweiten Kommunikationsmitteln 36 den Empfang vorbestimmter Steuerbefehle, beispielsweise zur Ansteuerung der Ventilmodule 26, 27, 28 blockiert.

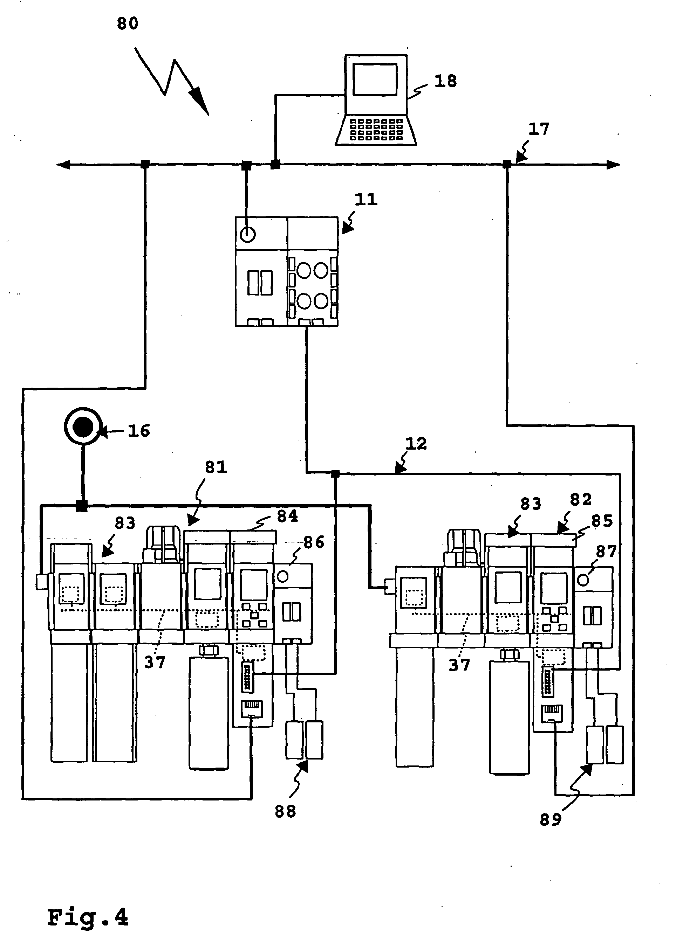

Anhand von Figur 4 werden nachfolgend weitere Varianten erfindungsgemäßer Wartungseinheiten vorgestellt. Soweit in Figur 4 Module oder Komponenten dargestellt sind, die dieselben Funktionen wie die entsprechenden Module gemäß Figur 1 aufweisen, sind dieselben Bezugszeichen verwendet. Eine nähere Erläuterung erfolgt daher nicht.

Bei einem pneumatischen System 80 gemäß Figur 4 steuert die Steuervorrichtung 11 über das Steuernetzwerk 12, das beispielsweise einen Feldbus enthält, Druckluft-Wartungseinheiten 81, 82, die Druckluft aus der Druckluftquelle 16 aufbereiten, beispielsweise filtern, trocknen, ölen bzw. deren Druck beeinflussen. Hierfür enthalten die Wartungseinheiten 81, 82 Wartungsmodule 83, die wie die Wartungsmodule 23 bis 25 aneinandergereiht sind und über einen internen Bus 37 miteinander kommunizieren. Zur Steuerung und Diagnose der Wartungseinheiten 81, 82 sind Steuermodule 84, 85 vorhanden, die in der Art der Steuermodulanordnung 20 in einer Baueinheit kombiniert sowohl Wartungsaufgaben als auch Diagnoseaufgaben erfüllen. Dementsprechend sind die Steuermodule 84, 85 sowohl an das Steuernetzwerk 12 über erste Kommunikationsmittel als auch über das an das Diagnosenetzwerk 17 über zweite Kommunikationsmittel angeschlossen, die bei jedem der Steuermodule 84, 85 vorhanden sind. Ferner kann jedes der Steuermodule 84, 85 als ein Diagnoseknoten dienen. Zu diesem Zweck sind Ein-/Ausgabemodule 86, 87 vorhanden, mit denen die Steuermodule 84, 85 jeweils über den internen Bus 37 kommunizieren. An die Ein-/Ausgabemodule 86, 87 sind jeweils Diagnosesensoren 88, 89 angeschlossen. Die Steuermodule bzw. Diagnosemodule 84, 85 können von den Diagnose-Sensoren 88, 89 über die Ein-/Ausgabemodule 86, 87 Diagnosemeldungen empfangen. Bei den Sensoren 88, 89 handelt es sich beispielsweise um Druckluftsensoren oder dergleichen.

## Patentansprüche

1. Steuermodulanordnung für eine batterieartig aufgebaute Druckluft-Wartungseinheit (14), die mehrere aneinander gereihte Wartungsmodule (23-25) wie z.B. Druckregler, Filter, Öler oder dergleichen aufweist, wobei die Steuermodulanordnung (20) zur Kommunikation mit den Wartungsmodulen (23-25) über einen internen Bus (37) der Wartungseinheit (14) ausgestaltet ist, und wobei die Steuermodulanordnung (20) erste Kommunikationsmittel (35) zur Kommunikation mit einer übergeordneten Steuervorrichtung (11) zur Steuerung und/oder Überwachung der Druckluft-Wartungseinheit (14) aufweist, **dadurch gekennzeichnet, dass** sie zweite Kommunikationsmittel (36) zur Kommunikation mit einer übergeordneten Diagnosevorrichtung (18) aufweist, über die Diagnosedaten (51) zur Diagnose mindestens einer Funktion der Druckluft-Wartungseinheit (14) separat von der Kommunikation mit der übergeordneten Steuervorrichtung (11) ausgebbar sind, so dass eine Steuerung der Steuermodulanordnung jederzeit möglich ist.

2. Steuermodulanordnung nach Anspruch 1, **dadurch gekennzeichnet, dass** sie die ersten Kommunikationsmittel (35) vorrangig vor den zweiten Kommunikationsmitteln (36) bedient.

3. Steuermodulanordnung nach Anspruch 1 oder 2, **dadurch gekennzeichnet, dass** sie über die ersten Kommunikationsmittel (35) weniger Diagnosemeldungen als über die zweiten Kommunikationsmittel (36) sendet.

4. Steuermodulanordnung nach einem der vorhergehenden Ansprüche, **dadurch gekennzeichnet, dass** bei ihr Sendeparameter zum Senden von Diagnosedaten (51) einstellbar sind.

5. Steuermodulanordnung nach einem der vorhergehenden Ansprüche, **dadurch gekennzeichnet, dass** die zweiten Kommunikationsmittel (36) eine Empfangssperre für vorbestimmte Steuerbefehle zur Steuerung der Druckluft-Wartungseinheit (14) aufweisen.

6. Steuermodulanordnung nach einem der vorhergehenden Ansprüche, **dadurch gekennzeichnet, dass** die ersten Kommunikationsmittel (35) echtzeitfähig sind und/oder die zweiten Kommunikationsmittel (36) eine größere Übertragungsbandbreite als die ersten Kommunikationsmittel (35) aufweisen.

7. Steuermodulanordnung nach einem der vorhergehenden Ansprüche, **dadurch gekennzeichnet, dass** die ersten Kommunikationsmittel (35) und/oder die zweiten Kommunikationsmittel (36) eine Bus-Schnittstelle, insbesondere eine Feldbus-Schnittstelle oder eine Ethernet-Schnittstelle, aufweisen.

8. Steuermodulanordnung nach einem der vorhergehenden Ansprüche, **dadurch gekennzeichnet, dass** die Diagnosedaten (51) ein durch einen Internet-Browser darstellbares Format aufweisen.

9. Steuermodulanordnung nach einem der vorhergehenden Ansprüche, **dadurch gekennzeichnet, dass** sie ein Steuermodul (21), das die ersten Kommunikationsmittel (35) zur Kommunikation mit der übergeordneten Steuervorrichtung (11) enthält, und ein Diagnosemodul aufweist, das die zweiten Kommunikationsmittel (36) zur Kommunikation mit der Diagnosevorrichtung (18) enthält.

10. Steuermodulanordnung nach einem der vorhergehenden Ansprüche, **dadurch gekennzeichnet, dass** sie Diagnosemittel (53) zur Kommunikation mit einer Ein-/Ausgabeeinrichtung (40) der Wartungseinheit (14) aufweist, wobei die Ein-/Ausgabeeinrichtung (40) Anschlussmittel (43) zum Anschluss mindestens eines von der Wartungseinheit (14) separaten Diagnose-Sensors (44-46) und/oder mindestens eines von der Wartungseinheit (14) separaten pneumatischen Druckluftbeeinflussungsaktors (47) aufweist, wobei die Steuermodulanordnung (20) über die Ein-/Ausgabeeinrichtung (40) den mindestens einen Druckluftbeeinflussungsaktor (47) steuern und/oder von dem mindestens einen separaten Diagnose-Sensor (44-46) Diagnose-Meldungen (48) empfangen kann.

11. Steuermodulanordnung nach einem der vorhergehenden Ansprüche, **dadurch gekennzeichnet, dass** sie zur Bildung der Diagnosedaten (51) anhand von Diagnose-Meldungen (48) der Wartungsmodule (23-25) und/oder des mindestens einen separaten Diagnose-Sensors (44-46) und/oder einer unterlagerten pneumatischen Baugruppe ausgestaltet ist, so dass die Druckluft-Wartungseinheit (14) einen Diagnoseknoten bildet.

12. Steuermodulanordnung nach einem der vorhergehenden Ansprüche, **dadurch gekennzeichnet, dass** sie zur Ansteuerung der Wartungsmodule (23-25) und/oder des mindestens einen von der Wartungseinheit (14) separaten Druckluftbeeinflussungsaktors (47) anhand der Diagnose-Meldungen (48) der Wartungsmodule (23-25) und/oder des mindestens einen separaten Diagnose-Sensors (44-46) ausgestaltet ist.

13. Steuermodulanordnung nach einem der vorhergehenden Ansprüche, **dadurch gekennzeichnet, dass** sie Diagnose-Meldungen (48) des mindestens einen separaten Diagnose-Sensors (44-46) und/oder der Wartungsmodule (23-25) anhand mindestens einer Verknüpfungsbedingung zu den Diagnosedaten (51) verknüpft.

14. Steuermodulanordnung nach einem der vorhergehenden Ansprüche, **dadurch gekennzeichnet, dass** sie bei der Bildung der Diagnosedaten (51) eine Datenreduktion durchführt.

15. Druckluft-Wartungseinheit (14) mit mehreren aneinander gereihten Wartungsmodulen (23-25) wie z.B. Druckregler, Filter, Öler oder dergleichen, **dadurch gekennzeichnet, dass** sie eine Steuermodulanordnung (20) nach einem der vorhergehenden Ansprüche aufweist.

## Claims

1. Control module assembly for a bank-type compressed air conditioner unit (14) which has several conditioner modules (23-25) such as e.g. pressure regulators, filters, oilers, etc. lined up together, wherein the control module assembly (20) is designed for communication with the conditioner modules (23-25) via an internal bus (37) of the conditioner unit (14), and wherein the control module assembly (20) has first communication means (35) for communication with a higher-level control unit (11) for control and/or monitoring of the compressed air conditioner unit (14), **characterised in that** it has second communication means (36) for communication with a higher-level diagnostic unit (18), via which diagnostic data (51) to diagnose one or more functions of the compressed air conditioner unit (14) may be output separately from the communication with the higher-level control unit (11), so that control of the control module assembly is possible at any time.

2. Control module assembly according to claim 1, **characterised in that** it gives priority to operating the first communication means (35) over the second communication means (36).

3. Control module assembly according to claim 1 or 2, **characterised in that** it sends fewer diagnostic messages over the first communication means (35) than over the second communication means (36).

4. Control module assembly according to any of the preceding claims, **characterised in that** it has adjustable transmission parameters for the sending of diagnostic data (51).

5. Control module assembly according to any of the preceding claims, **characterised in that** the second communication means (36) have a reception lock-out switch for predetermined control commands for controlling the compressed air conditioner unit (14).

6. Control module assembly according to any of the preceding claims, **characterised in that** the first communication means (35) are real-time-capable and/or the second communication means (36) have a greater transmission bandwidth than the first communication means (35).

7. Control module assembly according to any of the preceding claims, **characterised in that** the first communication means (35) and/or the second communication means (36) have a bus interface, in particular a field bus interface or an ethernet interface.

8. Control module assembly according to any of the preceding claims, **characterised in that** the diagnostic data (51) have a format which may be represented by an internet browser.

9. Control module assembly according to any of the preceding claims, **characterised in that** it has a control module (21) containing the first communication means (35) for communication with the higher-level control unit (11), and a diagnostic module containing the second communication means (36) for communication with the diagnostic unit (18).

10. Control module assembly according to any of the preceding claims, **characterised in that** it has diagnostic means (53) for communication with an input/output device (40) of the conditioner unit (14), wherein the input/output device (40) has connection means (43) for the connection of at least one diagnostic sensor (44-46) separate from the conditioner unit (14) and/or at least one pneumatic compressed air control element (47) separate from the conditioner unit (14), wherein the control module assembly (20) is able to control the compressed air control element or elements (47) via the input/output device (40) and/or is able to receive diagnostic messages (48) from the separate diagnostic sensor or sensors (44-46).

11. Control module assembly according to any of the preceding claims, **characterised in that** it is designed to form the diagnostic data (51) with the aid of diagnostic messages (48) from the conditioner modules (23-25) and/or the separate diagnostic sensor or sensors (44-46) and/or a subordinate pneumatic sub-assembly, so that the compressed air conditioner unit (14) forms a diagnostic node.

12. Control module assembly according to any of the preceding claims, **characterised in that** it is designed to control the conditioner modules (23-25) and/or the compressed air control element or elements (47) which are separate from the conditioner unit (14) with the aid of the diagnostic messages (48) of the conditioner modules (23-25) and/or the separate diagnostic sensor or sensors (44-46).

13. Control module assembly according to any of the preceding claims, **characterised in that** it links diagnostic messages (48) of the separate diagnostic sensor or sensors (44-46) and/or the conditioner modules (23-25) to form the diagnostic data (51) with the aid of one or more linking conditions.

14. Control module assembly according to any of the preceding claims **characterised in that**, in forming the diagnostic data (51), it carries out a data reduction.

15. Compressed air conditioner unit (14) with several conditioner modules (23-25) such as e.g. pressure regulators, filters, oilers, etc. lined up together, **characterised in that** it has a control module assembly (20) according to any of the preceding claims.

## Revendications

1. Agencement de module de commande pour une unité de surveillance d'air comprimé construite à la manière d'une batterie (14) qui comporte plusieurs modules de surveillance (23-25), comme par exemple des régulateurs de pression, des filtres, des lubrificateurs ou d'autres du même genre, montés en ligne les uns à côté des autres, l'agencement de module de commande (20) étant conçu pour la communication avec les modules de surveillance (23-25) par l'intermédiaire d'un bus interne (37) de l'unité de surveillance (14) et l'agencement de module de commande (20) comportant des premiers moyens de communication (35) pour la communication avec un dispositif de commande supérieur (11) pour la commande et/ou la surveillance de l'unité de surveillance d'air comprimé (14), **caractérisé en ce qu'**il comporte des deuxièmes moyens de communication (36) pour la communication avec un dispositif de diagnostic supérieur (18) par l'intermédiaire duquel des données de diagnostic (51) peuvent être délivrées séparément de la communication avec le dispositif de commande supérieur (11) pour diagnostiquer au moins une fonction de l'unité de surveillance d'air comprimé (14) de sorte qu'une commande de l'agencement de module de commande est possible à tout moment.

2. Agencement de module de commande selon la revendication 1, **caractérisé en ce qu'**il exploite prioritairement les premiers moyens de communication (35) avant les deuxièmes moyens de communication (36).

3. Agencement de module de commande selon la revendication 1 ou 2, **caractérisé en ce qu'**il envoie moins de messages de diagnostic par l'intermédiaire des premiers moyens de communication (35) que par l'intermédiaire des deuxièmes moyens de communication (36).

4. Agencement de module de commande selon l'une des revendications précédentes, **caractérisé en ce qu'**il peut régler des paramètres d'envoi pour l'envoi de données de diagnostic (51).

5. Agencement de module de commande selon l'une des revendications précédentes, **caractérisé en ce que** les deuxièmes moyens de communication (36) comportent un blocage de réception pour des ordres de commande prédéterminés pour la commande de l'unité de surveillance d'air comprimé (14).

6. Agencement de module de commande selon l'une des revendications précédentes, **caractérisé en ce que** les premiers moyens de communication (35) sont capables de fonctionner en temps réel et/ou les deuxièmes moyens de communication (36) comportent une largeur de bande de transmission plus grande que les premiers moyens de communication (35).

7. Agencement de module de commande selon l'une des revendications précédentes, **caractérisé en ce que** les premiers moyens de communication (35) et/ou les deuxièmes moyens de communication (36) comportent une interface par bus, en particulier une interface par bus de champ ou une interface Ethernet.

8. Agencement de module de commande selon l'une des revendications précédentes, **caractérisé en ce que** les données de diagnostic (51) présentent un format pouvant être représenté par un navigateur Internet.

9. Agencement de module de commande selon l'une des revendications précédentes, **caractérisé en ce qu'**il comprend un module de commande (21) qui contient les premiers moyens de communication (35) pour la communication avec le dispositif de commande supérieur (11) et un module de diagnostic qui contient les deuxièmes moyens de communication (36) pour la communication avec le dispositif de diagnostic (18).

10. Agencement de module de commande selon l'une des revendications précédentes, **caractérisé en ce qu'**il comporte des moyens de diagnostic (53) pour la communication avec un dispositif d'entrée/de sortie (40) de l'unité de surveillance (14), le dispositif d'entrée/de sortie (40) comportant des moyens de raccordement (43) pour le raccordement d'au moins un détecteur de diagnostic (44-46) séparé de l'unité de surveillance (14) et/ou d'au moins un actionneur pneumatique d'influence de l'air comprimé (47) séparé de l'unité de surveillance (14), l'agencement de module de commande (20) pouvant commander le au moins un actionneur pneumatique d'influence de l'air comprimé (47) par l'intermédiaire du dispositif d'entrée/de sortie (40) et/ou pouvant recevoir des messages de diagnostic (48) du au moins un détecteur de diagnostic séparé (44-46).

11. Agencement de module de commande selon l'une des revendications précédentes, **caractérisé en ce qu'**il est conçu pour élaborer les données de diagnostic (51) à l'aide des messages de diagnostic (48) des modules de surveillance (23-25) et/ou du au moins un détecteur de diagnostic séparé (44-46) et/ou d'un ensemble pneumatique subordonné, de sorte que l'unité de surveillance d'air comprimé (14) constitue un noeud de diagnostic.

12. Agencement de module de commande selon l'une des revendications précédentes, **caractérisé en ce qu'**il est conçu pour commander les modules de surveillance (23-25) et/ou le au moins un actionneur pneumatique d'influence de l'air comprimé (47) séparé de l'unité de surveillance (14) à l'aide des messages de diagnostic (48) des modules de surveillance (23-25) et/ou du au moins un détecteur de diagnostic séparé (44-46).

13. Agencement de module de commande selon l'une des revendications précédentes, **caractérisé en ce qu'**il établit une liaison entre les messages de diagnostic (48) du au moins un détecteur de diagnostic séparé (44-46) et/ou des modules de surveillance (23-25) et les données de diagnostic (51) à l'aide d'au moins une condition de liaison.

14. Agencement de module de commande selon l'une des revendications précédentes, **caractérisé en ce qu'**il réalise une réduction des données lors de l'élaboration des données de diagnostic (51).

15. Unité de surveillance d'air comprimé (14) avec plusieurs modules de surveillance (23-25), comme par exemple des régulateurs de pression, des filtres, des lubrificateurs ou d'autres du même genre, montés en ligne les uns à côté des autres, **caractérisée en ce qu'**elle comporte un agencement de module de commande (20) selon l'une des revendications précédentes.
